# EUROPÄISCHE PATENTANMELDUNG

(11) **EP 1 857 782 A2**
(43) Veröffentlichungstag der Anmeldung: **21.11.2007**
(21) Anmeldenummer: 07106286.3
(22) Anmeldetag: 17.04.2007
(51) Int. Cl.: G01D 5/245

(54) **Verfahren zur Bereitstellung einer Korrelation**

(30) Priorität: 17.05.2006 DE 102006022993
(71) Anmelder: ROBERT BOSCH GMBH, 70442 Stuttgart (DE)
(72) Erfinder: Dietrich, Manfred, 71706, Markgroeningen (DE)

(57) **Zusammenfassung**

Die Erfindung betrifft ein Verfahren zur Bereitstellung einer Korrelation zwischen einer periodischen Analog-Digital-Wandlung (8) und einem winkelsynchronen Signal, bei dem die periodische Analog-Digital-Wandlung (8) mit einer Zeitmarke (10), die mit dem winkelsynchronen Signal zusammenhängt, versehen und mit dieser Zeitmarke (10) einer Winkelposition einer Vorrichtung zugeordnet wird.

## Beschreibung

Die Erfindung betrifft ein Verfahren zur Bereitstellung einer Korrelation, eine Anordnung, die mindestens eine Einrichtung zur Bereitstellung einer Korrelation aufweist, ein Computerprogramm und ein Computerprogrammprodukt.

### Stand der Technik

Zur Verbesserung des Laufverhaltens eines Motors ist es zweckmäßig, über Informationen zu einer Bewegung einer Kurbelwelle des Motors, also deren augenblickliche Winkelposition und/oder Winkelgeschwindigkeit, zu verfügen. Hierzu ist bekannt, kurbelwellensynchrone Signale zu erfassen und zu aktualisieren. Dabei werden derartige Signale in einem winkelsynchronen Prozess, dem sogenannten syn()-Prozess berechnet bzw. durch externe Triggerung digitalisiert. Allerdings ist bei einer periodischen Berechnung und/oder Erfassung derartiger Signale keine Korrelation zu einer sogenannten "Kurbelwellenuhr" und somit einer Winkeluhr des Motors vorhanden.

In dem Beitrag "Messwerterfassung über Sensoren" von Don Alfano, Elektronik Informationen, Ausgabe 05/2005 wird die Erfassung von Signalen beschrieben. In diesem Artikel wird unter anderem darauf hingewiesen, dass Signale, die von einem Sensor erfasst werden, zur Weiterverarbeitung einer Analog-Digital-Wandlung zu unterziehen sind. Hierbei erfordert eine Erfassung von Sensordaten mehr als einen gewöhnlichen Analog-Digital-Wandler, was vor allem dann der Fall ist, wenn eine Linearisierung erforderlich ist. Demnach ist für einen optimalen Betrieb ein integrierender Wandler mit einem passenden Analog-Frontend erforderlich.

Bei dem erfindungsgemäßen Verfahren zur Bereitstellung einer Korrelation zwischen einer periodischen Analog-Digital-Wandlung und einem winkelsynchronen Signal wird die periodische Analog-Digital-Wandlung mit einer Zeitmarke, die mit dem winkelsynchronen Signal zusammenhängt, versehen und mit dieser Zeitmarke einer Winkelposition einer Vorrichtung zugeordnet.

Das Verfahren eignet sich insbesondere für Vorrichtungen, die Drehbewegungen ausführen. Derartige Vorrichtungen kommen üblicherweise in Fahrzeugen zum Einsatz. Mit dem erfindungsgemäßen Verfahren ist es somit in einer Ausgestaltung möglich, einen Bewegungsablauf einer als Kurbelwelle eines Motors ausgebildeten Vorrichtung zu bestimmen. Bei einer derartigen Bestimmung des Bewegungsablaufs können Informationen über eine Winkelposition und/oder eine Winkelgeschwindigkeit der Vorrichtung bereitgestellt werden.

Mit dem Verfahren kann eine Zeit- bzw. Winkelkorrelation zwischen der periodischen Analog-Digital-Wandlung und dem winkelsynchronen Signal hergestellt werden. Dieses Signal kann von einer Endstufe oder einer sog. ECU, "electrical control unit" bzw. einer elektronischen Steuereinheit oder einem entsprechenden Steuergerät bereitgestellt werden. Die Ableitung der Zeitmarke kann auf Basis eines Zählers einer CAPCOM-Unit geschehen. Bei dieser CAPCOM-UNIT handelt es sich in Ausgestaltung um eine Uhr mit einer kleinsten Zeiteinheit, die durch eine Frequenz bestimmt wird, mit der ein Timer getaktet wird.

Die erfindungsgemäße Anordnung weist mindestens eine Einrichtung zur Bereitstellung einer Korrelation zwischen einer periodischen Analog-Digital-Wandlung und einem winkelsynchronen Signal auf. Es ist vorgesehen, dass diese mindestens eine Einrichtung die periodische Analog-Digital-Wandlung mit einer Zeitmarke, die mit dem winkelsynchronen Signal zusammenhängt, versieht und über diese Zeitmarke eine Winkelposition einer Vorrichtung zuordnet.

Diese Anordnung ist zur Durchführung sämtlicher Schritte des erfindungsgemäßen Verfahrens ausgebildet. Dabei führt die mindestens eine Einrichtung mindestens einen Schritt des Verfahrens aus. Die Anordnung weist in Ausgestaltung als die mindestens eine Einrichtung einen Analog-Digital-Wandler zur Durchführung einer periodischen Analog-Digital-Wandlung und eine elektronische Einheit zur Bereitstellung der Zeitmarke auf. Diese elektronische Einheit ist bspw. als Komponente einer Endstufe, die mit der Vorrichtung zusammenwirkt und das winkelsynchronen Signals bereitstellt, ausgebildet. In Ausgestaltung ist des weiteren möglich, dass die Zeitmarke von der elektronischen Einheit bereitgestellt wird. Die Endstufe kann ebenfalls als eine mögliche Einrichtung der Anordnung vorgesehen sein.

Die Erfindung betrifft außerdem ein Computerprogramm mit Programmcodemitteln, um alle Schritte eines erfindungsgemäßen Verfahrens durchzuführen, wenn das Computerprogramm auf einem Computer oder einer entsprechenden Recheneinheit, insbesondere in einer Einrichtung für eine erfindungsgemäße Anordnung, ausgeführt wird.

Die Erfindung betrifft des weiteren ein Computerprogrammprodukt mit Programmcodemitteln, die auf einem computerlesbaren Datenträger gespeichert sind, um alle Schritte eines erfindungsgemäßen Verfahrens durchzuführen, wenn das Computerprogramm auf einem Computer oder einer entsprechenden Recheneinheit, insbesondere in einer Einrichtung für eine erfindungsgemäße Anordnung, ausgeführt wird.

Mit der Erfindung ist es möglich, für das winkelsynchrone Signal zu beurteilen, ob die von dem Analog-Digital-Wandler periodisch vorgenommenen Analog-Digital-Wandlungen relativ zu einem Beginn eines Zyklus des Endstufensignals in einem vorgegebenen Zeitintervall liegen. Üblicherweise werden bei Anwendungen der Erfindung Zeiten berücksichtigt, so dass Signalanstiegszeiten, insbesondere Zeitabstände zwischen Flanken des Signals und Analog-Digital-Wandlungen, berücksichtigt werden können. Alternativ ist auch denkbar, dass die Analog-Digital-Wandlungen relativ zu einem Beginn eines Zyklus des Endstufensignals in einem vorgegebenen Winkelintervall liegt. Dies ist insbesondere für ein von der Endstufe als Einrichtung der Anordnung bereitgestelltes winkelsynchrones Endstufensignal möglich. Es ist denkbar, das Verfahren unter Einsatz der elektronischen Einheit, die beispielsweise als sog. CAPCOM-Unit bzw. "capture/compare"-Einheit ausgebildet sein kann, durchzuführen. Derartige CAPCOM-Units sind üblicherweise zum Erfassen und Vergleichen von Daten, Signalen und dergleichen ausgebildet.

Die Vorrichtung dreht sich in der Regel um eine Achse und nimmt dabei im Laufe der Zeit verschiedene Winkelpositionen ein. Die jeweiligen Winkelpositionen können insbesondere durch einen Sensor, der die Endstufe umfasst, oder ein sensorartiges Modul, das mit einer Endstufe zusammenwirkt, erfasst werden. Auf Grundlage der erfassten Winkelposition stellt der Sensor oder das sensorartige Modul mindestens ein Datum und/oder Signal bereit, aus dem von der Endstufe das winkelsynchrone Signal gebildet wird.

In Ausgestaltung der Erfindung ist somit vorgesehen, dass jede periodische Analog-Digital-Wandlung, die von einem insbesondere als ERCOS-BIOS ausgebildeten Analog-Digital-Wandler angestoßen wird, mit der Zeitmarke versehen wird, die mit Hilfe der elektronischen Einheit ermittelt wird. Über diese Zeitmarke lässt sich jede Analog-Digital-Wandlung (ADC) einer Winkelposition zuordnen. Eine derartige Zuordnung kann relativ zu einem Beginn eines Ansteuerzyklus der Endstufe vorgenommen werden. Unter Einbeziehung und somit Berücksichtigung einer Wandlungsgeschwindigkeit der periodischen Analog-Digital-Wandlung und somit des AD-Wandlers (ADC-Unit, Analog-Digital-Wandler) ist eine Genauigkeit des Verfahrens zu erhöhen. Eine weitere Verbesserung des Verfahrens ist dadurch möglich, indem eine Nummer eines Kanals des AD-Wandlers, der die Analog-Digital-Wandlung durchführt, einbezogen wird.

Zur Realisierung der Erfindung ist denkbar, periodische Analog-Digital-Wandlungen, insbesondere in einer MED7, durch ein sogenanntes "Einhängen" eines Wandlungsprozesses in einen, bspw. als 1-ms-Task-Container ausgebildeten, Objektspeicher eines Betriebssystems des, bspw. als ERCOS-BIOS ausgebildeten, Analog-Digital-Wandlers anzustoßen. Ein derartiges Anstoßen dieses Wandlungsprozesses bewirkt, dass der AD-Wandler selbständig eine Warteschlange bzw. Queue mit beispielsweise 16 Wandlungsergebnissen füllt. Dabei entspricht jedes Wandlungsergebnis einem digitalisierten Analogspannungswert. Falls jede dieser sechzehn Wandlungen 6 µs dauert, ist die Warteschlange somit nach 16 * 6 µs = 96 µs gefüllt. Somit ist ein Zeitpunkt der Durchführung der periodischen Analog-Digital-Wandlung unter Berücksichtigung der Warteschlange für Daten des Analog-Digital-Wandlers bestimmbar.

In Ausgestaltung ist vorgesehen, diesem AD-Wandlungsprozess unmittelbar folgend einen weiteren Prozess anzuhängen, dessen einzige Aufgabe darin bestehen kann, einen aktuellen Zählerstand eines Zeitgebers (Timers) der CAPCOM-Unit zu erfassen. Ein derart ermittelter Zählerwert spiegelt unter Berücksichtigung einer Füllgeschwindigkeit der Warteschlange mit den Wandlungsergebnissen einen Zeitpunkt der AD-Wandlung wieder. Der Zeitpunkt der Durchführung der periodischen Analog-Digital-Wandlung wird üblicherweise mit einem Wert einer Zähleinrichtung zur Bestimmung einer Winkelposition der Vorrichtung in Bezug gesetzt. Der Zeitgeber oder Zeitzähler wird demnach über einen als Zahnzähler und somit als Zähleinrichtung ausgebildeten Sensor mit einer Winkelposition der als Kurbelwelle ausgebildeten Vorrichtung eines Motors in Bezug gesetzt. Mit dem derart bereitgestellten Ergebnis ist somit auch die Winkelposition der Kurbelwelle bekannt, zu der ein vorbestimmter AD-Kanal des AD-Wandlers das winkelsynchrone Ausgangssignal der Endstufe digitalisierte.

Kurze Beschreibung der Zeichnungen
- Figur 1: zeigt in schematischer Darstellung Details zu einer Datenverarbeitung bei einer Ausführungsform des erfindungsgemäßen Verfahrens.
- Figur 2: zeigt in schematischer Darstellung eine Ausführungsform einer erfindungsgemäßen Anordnung.

### Ausführungsformen der Erfindung

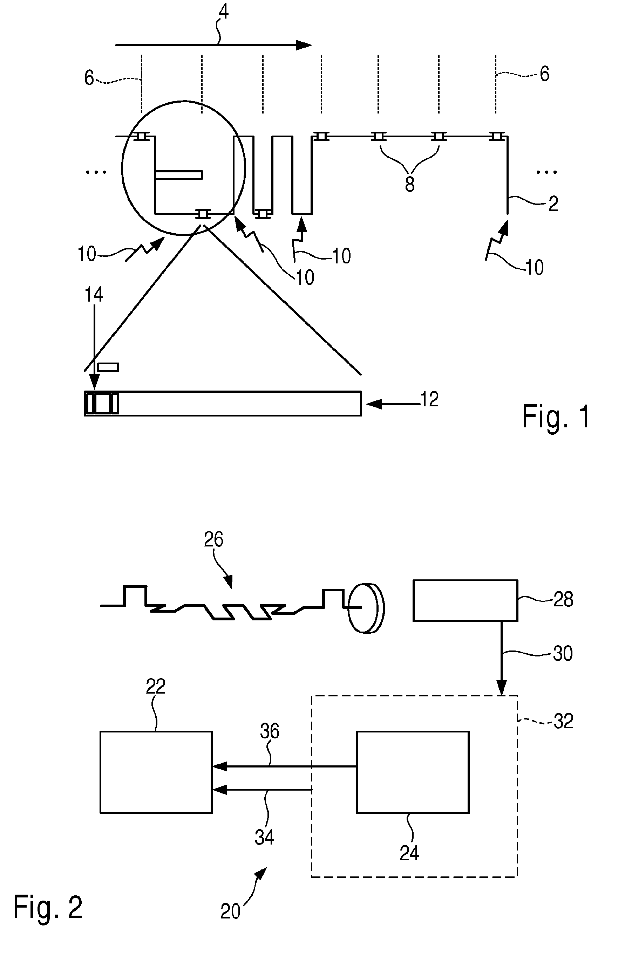

Figur 1 zeigt in schematischer Darstellung eine Kurve 2 eines von einer Endstufe bereitgestellten winkelsynchronen Signals einer in vorliegender Ausführungsform als Kurbelwelle ausgebildeten Vorrichtung. Die Kurve 2 weist eine rechteckförmige Struktur auf und ist entlang einer Zeitachse 4 aufgetragen. 1-ms-Tasks sind in dieser Darstellung durch die gestrichelten Linien 6 begrenzt.

Es ist vorgesehen, dass nach jeweils 1 ms in einem 1-ms-Task durch einen Analog-Digital-Wandler eine periodische Analog-Digital-Wandlung 8 erfolgt. Außerdem werden von einer elektronischen Einheit, die zum Erfassen und Vergleichen (CAPCOM-Unit) von Signalen und als eine Komponente der Endstufe ausgebildet ist, zu dem Signal winkelsynchrone Zeitmarken 10 bereitgestellt, die hier als Blitze dargestellt sind.

Im unteren Bereich der Figur 1 ist in schematischer Darstellung eine Warteschlange 12 für Wandlungsergebnisse für die periodischen Analog-Digital-Wandlungen 8 eines 1-ms-tasks dargestellt. Diese Warteschlange 12 ist einem Kanal 14 des Analog-Digital-Wandlers, der für eine Diagnose des Signals der Endstufe verwendet wird, zugeordnet. Es ist in dieser Ausführungsform vorgesehen, dass jede Analog-Digital-Wandlung 8 eine Dauer von 6 µs aufweist und dass die Warteschlange 12 sechzehn Kanäle 14 umfasst, somit ist die Warteschlange nach 96 µs gefüllt.

Figur 2 zeigt in schematischer Darstellung eine Ausführungsform einer erfindungsgemäßen Anordnung 20, die hier als erste Einrichtung 22 einen Analog-Digital-Wandler und als zweite Einrichtung 24 eine elektronische Einheit umfasst. Diese elektronische Einheit ist in der vorliegenden Ausführungsform als sog. CAPCOM-Unit ausgebildet, wobei CAPCOM für "capture/compare" steht. Somit ist die als elektronische Einheit ausgebildete zweite Einrichtung 24 zum Erfassen und Vergleichen von Daten und/oder Signalen ausgebildet.

Eine Winkelposition einer Kurbelwelle 26 wird mittels eines Sensors 28, der hier als ein sog. Zahnzähler der Kurbelwelle 26 ausgebildet ist, erfasst. Sich dabei ergebende Daten 30 des Sensors 28 werden einer Endstufe 32 (gestricheltes Viereck), die als eine Komponente die als elektronische Einheit ausgebildete zweite Einrichtung 24 aufweist, zugeführt.

Auf Grundlage dieser Daten 30 wird von der Endstufe 32 ein winkelsynchrones Signal 34 bereitgestellt. Eine periodischen Analog-Digital-Wandlung der als Analog-Digital-Wandler ausgebildeten ersten Einrichtung 22 wird von der elektronischen Einheit und somit der zweiten Einrichtung 24 mit einer Zeitmarke 36, die mit dem winkelsynchronen Signal 34 zusammenhängt, versehen und mit dieser Zeitmarke 36 einer Winkelposition der Kurbelwelle zugeordnet. Somit ist es möglich, eine Korrelation zwischen der periodischen Analog-Digital-Wandlung und dem winkelsynchronen Signal 36 bereitzustellen.

## Patentansprüche

1. Verfahren zur Bereitstellung einer Korrelation zwischen einer periodischen Analog-Digital-Wandlung (8) und einem winkelsynchronen Signal (34), bei dem die periodische Analog-Digital-Wandlung (8) mit einer Zeitmarke (10, 36), die mit dem winkelsynchronen Signal (34) zusammenhängt, versehen und mit dieser Zeitmarke (10, 36) einer Winkelposition einer Vorrichtung zugeordnet wird.

2. Verfahren nach Anspruch 1, bei dem eine Wandlungsgeschwindigkeit, mit der die periodischen Analog-Digital-Wandlung (8) durchgeführt wird, einbezogen wird.

3. Verfahren nach Anspruch 1 oder 2, bei dem die periodische Analog-Digital-Wandlung (8) durch einen Analog-Digital-Wandler durchgeführt, das winkelsynchrone Signal (34) von einer Endstufe (32), die mit der Vorrichtung zusammenwirkt, bereitgestellt und die Zeitmarke (10, 36) von einer elektronischen Einheit der Endstufe (32) bereitgestellt wird.

4. Verfahren nach Anspruch 3, bei dem eine Nummer eines Kanals (14) des Analog-Digital-Wandlers, der die periodische Analog-Digital-Wandlung (8) durchführt, einbezogen wird.

5. Verfahren nach Anspruch 3 oder 4, bei dem ein Zeitpunkt der Durchführung der periodischen Analog-Digital-Wandlung (8) unter Berücksichtigung einer Warteschlange (12) für Daten des Analog-Digital-Wandlers bestimmt wird.

6. Verfahren nach Anspruch 5, bei dem der Zeitpunkt mit einem Wert einer Zähleinrichtung zur Bestimmung einer Winkelposition der Vorrichtung in Bezug gesetzt wird.

7. Verfahren nach einem der voranstehenden Ansprüche, bei dem die periodische Analog-Digital-Wandlung (8) durch Einhängen eines Wandlungsprozesses in einem Objektspeicher eines Betriebssystem angestoßen wird.

8. Verfahren nach einem der voranstehenden Ansprüche, das zur Bestimmung einer Winkelposition einer als Kurbelwelle (26) ausgebildeten Vorrichtung verwendet wird.

9. Anordnung, die mindestens eine Einrichtung (22, 24) zur Bereitstellung einer Korrelation zwischen einer periodischen Analog-Digital-Wandlung (8) und einem winkelsynchronen Signal (34) aufweist, wobei diese mindestens eine Einrichtung die periodische Analog-Digital-Wandlung (8) mit einer Zeitmarke (10, 36), die mit dem winkelsynchronen Signal (34) zusammenhängt, versieht und über diese Zeitmarke (10, 36) einer Winkelposition einer Vorrichtung zuordnet.

10. Anordnung nach Anspruch 9, die als die mindestens eine Einrichtung (22, 24) einen Analog-Digital-Wandler zur Durchführung einer periodischen Analog-Digital-Wandlung (8) und eine elektronische Einheit zur Bereitstellung der Zeitmarke (10, 36) aufweist.

11. Anordnung nach Anspruch 10, bei der die elektronische Einheit als Komponente einer Endstufe (32), die mit der Vorrichtung zusammenwirkt und das winkelsynchrone Signal (34) bereitstellt, ausgebildet ist.

12. Computerprogramm mit Programmcodemitteln, um alle Schritte eines Verfahrens nach einem der Ansprüche 1 bis 8 durchzuführen, wenn das Computerprogramm auf einem Computer oder einer entsprechenden Recheneinheit, insbesondere in einer Einrichtung für eine Anordnung (20) nach einem der Ansprüche 9 bis 11, ausgeführt wird.

13. Computerprogrammprodukt mit Programmcodemitteln, die auf einem computerlesbaren Datenträger gespeichert sind, um alle Schritte eines Verfahrens nach einem der Ansprüche 1 bis 8 durchzuführen, wenn das Computerprogramm auf einem Computer oder einer entsprechenden Recheneinheit, insbesondere in einer Einrichtung für eine Anordnung (20) nach einem der Ansprüche 9 bis 11, ausgeführt wird.
